# EUROPEAN PATENT SPECIFICATION

(11) **EP 1 793 688 B1**
(45) Date of publication and mention of the grant of the patent: **17.03.2010**
(21) Application number: 05770644.2
(22) Date of filing: 29.07.2005
(51) Int. Cl.: A23L 1/015, A23C 7/04, A23C 9/152, A23L 1/32, A23C 11/10

(54) **METHOD FOR CONDITIONING LIQUID, NEUTRAL PRODUCTS, AND THE PRODUCTS OBTAINED AND OBTAINABLE THEREWITH**
VERFAHREN ZUR KONDITIONIERUNG VON FLÜSSIGEN NEUTRALEN PRODUKTEN SOWIE SO ERHALTENE UND ERHÄLTLICHE PRODUKTE
PROCEDE DE CONDITIONNEMENT DE PRODUITS LIQUIDES NEUTRES, PRODUITS OBTENUS ET PRODUITS POUVANT ETRE OBTENUS

(30) Priority: 30.07.2004 NL 1026754
(43) Date of publication of application: 13.06.2007
(73) Proprietor: Friesland Brands B.V., 7943 PE Meppel (NL)
(72) Inventor: BONGERS, Cornelis, Margaretha, Theodorus, Maria, NL-5707 KR Helmond (NL); MARTENS, Mathijs, Hendrikus, Johannes, NL-6916 MA Tolkamer (NL); NETJES, Luite, Theodoor, NL-8264 AE Kampen (NL); SIKKEMA, Jan, NL-9483 PC Zeegse (NL); WIJSMAN, Martin, Rinke, NL-8102 KC Raalte (NL)
(74) Representative: van Loon, C.J.J.
(86) International application number: PCT/NL2005/000558
(87) International publication number: WO 2006/011802

(56) References cited:
- EP-A- 0 304 029
- EP-A- 0 442 781
- CH-A- 498 587
- US-A- 2 428 044
- US-A- 4 524 083
- US-A- 4 766 001
- ALLEN D B: "DE-AERATION OF LIQUIDS" AUSTRALIAN GRAPEGROWER AND WINEMAKER, RYAN PUBLICATIONS, ADELAIDE, AU, vol. 352, 1993, pages 152-153, XP008042163 ISSN: 0727-3606
- ANDERSSON I ET AL: "SENSORY CHANGES AND FREE SH-GROUPS IN UHT MILK" MILCHWISSENSCHAFT, VV GMBH VOLKSWIRTSCHAFTLICHER VERLAG. MUNCHEN, DE, vol. 47, no. 7, January 1992 (1992-01), pages 438-441, XP000297446 ISSN: 0026-3788
- FINK R ET AL: "The effect of head space volume on the quality of stored degassed UHT milk." MILCHWISSENSCHAFT 1986 INST. FÜR MILCHWISSENSCHAFT & LEBENSMITTELVERFAHRENSTECH., TECH. UNIV. MÜNCHEN, FREISING-WEIHENSTEPHAN, FEDERAL REPUBLIC OF GERMANY, vol. 41, no. 3, 1986, pages 152-155, XP008043471
- MURRAY S K ET AL: "Effect of nitrogen-flushing on the production of proteinase by psychrotrophic bacteria in raw milk." JOURNAL OF FOOD SCIENCE 1983 DEP. OF FOOD SCI., UNIV. OF BRITISH COLUMBIA, VANCOUVER, BRITISH COLUMBIA, V6T 2A2, CANADA, vol. 48, no. 4, 1983, pages 1166-1169, XP008042184
- PATENT ABSTRACTS OF JAPAN vol. 2003, no. 12, 5 December 2003 (2003-12-05) -& JP 2004 201601 A (MEIJI MILK PROD CO LTD), 22 July 2004 (2004-07-22)

## Description

The invention relates to a method for conditioning liquid, neutral products which are intended for consumption or for processing into foods. In particular, the invention concerns a method for setting, modifying or otherwise controlling the gas composition in such products at any time or during the complete treatment process. Further, the invention relates to the products obtained and obtainable from this method, which products possess improved properties and in particular an improved microbiological quality.

Preferably, as far as the product allows this, the invention concerns the treatment of pasteurized liquid, neutral products which have an improved shelf life and/or an improved quality.

Liquid, neutral products which are intended for consumption or for processing into foods, in this description and the appended claims, are products having therein an aqueous phase and proteins, and a pH in the range of 5.0-8.0 and preferably in the range of 5.5-7.5. Preferably, these products also contain a fat phase. Examples of such products are liquid egg, milk, liquid neutral milk products, cream and cream products, cooking cream, pastry cream, pancake mix, soya milk and other liquids based on animal and/or vegetable proteins. Characteristically, these products are typically good nutrient substrates for microorganisms and are therefore subject to decay.

Producers and processors of such neutral, liquid products are therefore continuously faced with the stringent requirements imposed upon such products from a bacteriological point of view. At the same time, however, the product should remain reasonably priced. In practice, it is being attempted to take steps as early as possible in the production chain to prevent decay, at least quality deterioration, of the liquid, neutral products.

The use of preserving techniques based on increasing the temperature is not a practical or even a realistic option for protein-containing products, such as egg-protein containing products. Soon, denaturation can arise with attendant coagulation.

Conventionally used methods of stalling the occurrence of decay and preventing quality deterioration of the products to which the invention relates comprise storage and transport at low temperature (typically lower than 7°C, and preferably lower than 4°C); thermizing or otherwise heat-treating; activation of possibly naturally occurring antibacterial enzymes in such products, as in milk and in liquid egg; and addition of preservatives.

Over the last years, for instance, much research has been done on the addition of CO₂ to milk and in particular to freshly cooled milk, which product will be used as an exemplary product in this description, but the invention should not be construed as being limited thereto.

Cooling raw milk inhibits the growth of mesophilic bacteria, which extends the storage stability of milk before it is to be processed. The growth of psychrotrophic (cold-loving) bacteria, however, is not inhibited and sometimes actually stimulated, while moreover the danger of post-contamination by psychrotrophic organisms remains present. Although these bacteria are killed off upon a thermal treatment of milk, this does not hold true of all enzymes secreted by these microorganisms, particularly not of proteases and lipases. These enzymes are capable of degrading different milk components and in particular proteins and fats, so that the keeping quality of heat-treated milk and the quality of dairy products prepared therefrom is adversely affected. Thus, the presence of lipases in milk gives an unpleasant rancid flavor. Microbial proteases contribute to bitterness, while moreover casein is degraded, which is unfavorable for, for instance, the cheese production from that milk.

It is known that CO₂ hinders the growth of psychrotrophic microorganisms causing milk decay. Thus, King and Mabbitt in J. Dairy Res. 49 (1982), 439-447 have investigated what the effects are of concentrations of 10-30 mM CO₂ on the growth of such organisms in untreated whole milk. On the basis of their work, they conclude that
"the inhibitory effects of CO₂ were not due to increased acidity or to displacement of dissolved O_{2,} but to the presence of CO₂ *per* se which induced an increase in the duration of the lag phase of growth and had only a small effect on the logarithmic phase".

Hotchkiss et al. teach in J. Dairy Sci. 82 (1999) 690-695 that in pasteurized milk, the addition of CO₂ in amounts of 8.7 mM and higher in combination with the use of barrier films in packages, extends shelf life. In particular, for cooled milk, the shelf life has been found to increase by a day and a half when using 8.7 mM CO₂.

Further, the addition of CO₂ to milk is also taught by Ruas-Madiedo et al. in J. Agric. Food Chem. 46 (1998) 1552-1555 and in Eur. Food Res. Technol. 212 (2000) 44-47 (both to a pH of 6.1-6.3); Ma et al. in J. Dairy Sci. 84 (2001) 1959-1968 (200-1000 ppm), Roberts and Torrey in J. Dairy Sci. 71 (1988) 52-66 (20-30 mM), Ma and Barbano in J. Dairy Sci. 86 (2003) 1578-1589 (400-2400 ppm), Guillaume et al. in J. Dairy Sci. 85 (2002) 2098-2105 (to pH 5.8).

Also, Ma and Barbano in J. Dairy Sci. 86 (2003) 3822-3830 describe that carbonating raw skim milk by adding CO₂ in amounts of at least 600 ppm has an advantageous effect in pasteurization. In particular, this effect is attributed to the pH decrease which the CO₂ entails. CO₂ is described as a processing aid, which substance can be removed from the product again by applying vacuum. Previously, Loss and Hotchkiss (J. Food Prot. 65 (2002) 1924-1929) had already found a similar positive effect in milk with 44-58 mM CO₂; both are also cited as inventors on the United States patent application 2002/0127317, in which the combination of CO₂ addition and pasteurization for inhibiting or reducing bacterial growth is claimed.

In practice, there seems to be consensus about the fact that at CO₂ contents lower than 300-400 ppm no antimicrobiological effect is associated with the CO₂.

Similar effects and activities occur in the other neutral, liquid, protein- and preferably also fat-containing products.

Further, a great deal is already known about the oxygen content of a product and the effects thereof.

In an article by Murray et al. in J. Food Science 48 (1983), 1166-1169, passing nitrogen gas through raw milk is connected with an extended lag phase and slower growth rate of psychrotrophs and lactic acid bacteria.

Furthermore, for instance D.B. Allen, in an article entitled "De-aeration of liquids" in "The Australian Grapegrower and Winemaker", Annual Technical Issue (1993), pp. 152-153 (Ryan Publications, Adelaide Australia), describes that a low residual dissolved oxygen concentration in liquid foods provides advantages for the storage stability, the organoleptic properties and the nutritional value. As possible techniques for lowering the oxygen concentration, stripping with nitrogen gas or carbon dioxide gas is pointed out.

Deoxygenation or carbonation of liquid foods or biological products by injecting nitrogen gas or carbon dioxide gas into them is also described in US-A-4,766,001.

In EP-A-0 442 781 it is described that the oxygen content in foods and drinks can be reduced utilizing ascorbate oxidase.

The old U.S. Patent 2,428,044 describes the use of vacuum techniques for removing gases from liquid foods.

Further, a number of publications have appeared which discuss the effects of oxygen on UHT-heated milk, and in particular milk treated at a temperature of 130-150°C.

Andersson and Öste, in Milchwissenschaft 47 (1992) No. 7, 438-441, remark that upon such a UHT-heating, chemical changes occur that depend on the oxygen content in the milk. By using sufficient oxygen in the headspace of the package, it has been found that the free mercapto groups in the milk responsible for a cooked flavor are oxidized, so that this cooked flavor is expressed less.

Also Fink and Kessler come to the conclusion that the -SH groups produced in an UHT-step are oxidized by oxygen in the milk.

The Japanese publication 2004-201601 concerns a high-temperature sterilized cream, in which the cooked flavor is reduced by the oxygen regime.

The French patent specification 782 803 describes the displacement of oxygen by compressed carbon dioxide from milk that is sterilized.

In the article by Lechner in Deutsche Milchwirtschaft (1976) 27, no. 14, Beil. Lebensmittel-Labor 4, pp. II-IV, changes of the oxygen content in sterilized milk are studied by determining the ascorbate content. Effects of degassing and airtight packaging proved to have the greatest influence on maintaining a virtually constant ascorbate content.

US-A-3,065,086 describes the preparation of sterilized concentrated milk products. For these products too, the oxygen content plays a role in connection with off-flavors caused by sterilization.

The object of the present invention is, by managing the gas composition in liquid, neutral products or in the production thereof, to come to one or more of the following advantages: an improved microbiological quality, an improved physical and/or chemical stability and shelf life. Further, it is endeavored to limit the operational costs.

It has now been found that by intervening in particular at the level of the oxygen content and simultaneously managing the carbon dioxide economy, one or more of the just-mentioned advantages are obtained.

In a first aspect, the invention concerns a method for conditioning a liquid, neutral product, which product is intended for consumption or for processing into food, and which product has an aqueous phase and proteins, and has a pH in the range of 5.0-8.0 comprising carrying out at least a step in which the oxygen content in this product is set at a value lower than 500 ppb, and additionally comprising the setting of the carbon dioxide content in this product at a value between 10 ppm and 1500 ppm. In a preferred embodiment, the oxygen content is set such that the value is eventually less than 250 ppb, preferably less than 150 ppb and more preferably less than 100 ppb.

In this description, the abbreviations "ppb" and "ppm" respectively mean "parts per billion parts" and "parts per million parts". These ppb and ppm values can be determined in a manner known to those skilled in the art, for instance, for oxygen, in-line with an Orbisphere 3636 or off-line with an Orbisphere 3650; and, for carbon dioxide, in-line with an Orbisphere 3610 or off-line with an Orbisphere 3654.

Upon an oxygen shock, that is, in a situation where the oxygen content in the neutral, liquid product is temporarily adjusted to a value lower than 500 ppb, preferably lower than 250 ppb, more preferably lower than 150 ppb and most preferably lower than 100 ppb, an improved microbiological quality is obtained and hence a longer shelf life.

The method according to the invention can be suitably used for those products that are liquid at any time.

In this description and the appended claims, "milk product" (also "dairy product") means "products with milk constituents", while "milk constituents" includes milk, whey, permeate, milk protein (in particular casein, caseinate and/or whey protein, whether or not in concentrated form) and milk fat. Examples of such products are milk-based drinks, vla or drinks based on whey and permeate.

Thus, it has been found that pasteurized milk or a pasteurized milk product, which products usually have a shelf life of 7-8 days, can attain a shelf life of about three weeks when the oxygen content in the packaged milk or the packaged milk product is lowered, according to the invention, to below 500 ppb and preferably to below the above-mentioned preferred values.

It is possible to displace the oxygen from the liquid, neutral product by passing a non-oxygen containing gas into and/or through these liquid products, optionally combined with interim degassing using reduced pressure. For instance, good results are achieved by passing through nitrogen gas, carbon dioxide gas, laughing gas, inert gases, in particular argon, or mixtures thereof. In view of the costs, the use of inert gases is not preferred. When using, for instance, carbon dioxide gas, it needs to be taken into account that this gas has organoleptic effects, which are not always desirable; in such cases, the gas is to be applied in such a way that in the final product this gas falls or remains below the sensorily perceptible threshold.

When oxygen is to be displaced from a product which contains a fatty phase, it may be necessary, at least desirable, to heat the product to values above the melting point (range) of the fat present in that product, in order that oxygen trapped in fat crystals be released from them. In a preferred embodiment, this can be suitably carried out by first separating the neutral, liquid product into an aqueous phase and a fatty phase, and then heating the fatty phase, for instance the cream fraction, and rendering it low in oxygen. For the aqueous fraction, for instance the skim milk fraction, a simpler method will then suffice. Preferably, for degassing, flash vacuum techniques are used.

Because in addition to fat fractions, protein molecules have also been found to retain oxygen, it is desirable to repeat the oxygen removal step one or more times, while between the oxygen removal steps the neutral liquid product must be allowed to release oxygen to the fat- and protein-comprising aqueous phase.

As indicated above, at CO₂ contents lower than 300-400 ppm, no antimicrobiological effect is associated with the CO₂. It is thus surprising that a combination of the relatively low oxygen content with the relatively low carbon dioxide content has a synergistic antimicrobiological effect, at least inhibits the growth of bacteria and other microorganisms.

Good results are obtained according to the invention with methods in which the neutral, liquid product is selected from liquid egg, milk, liquid neutral milk products, cream and cream products, cooking cream, pastry cream, pancake mix, soya milk and other liquids based on animal and/or vegetable proteins, as well as mixtures thereof.

More in general, good results are obtained in neutral products based on raw materials of vegetable and animal origin (fruits, milk, egg) which from the natural metabolism experience a low oxygen concentration and are exposed to a higher carbon dioxide content than their environment.

Incidentally, it is known from United States patent 4,524,083 to remove oxygen from liquid-egg products to a content of less than 3 ppm. It is expressly stated in this publication that the removal of oxygen must not be carried out with carbon dioxide gas. According to the present invention, however, carbon dioxide gas is preferred, because the content of this gas must be set as well.

In a preferred embodiment of the method according to the invention, as far as it is applied to milk, steps are taken so that no or hardly any oxygen is taken up by the milk, starting from the oxygen content of milk in the mammal from which the milk is obtained. By nature, milk in the body of a mammal has an oxygen content that is very low; the oxygen content in milk is determined by the gas content in the blood. In blood, the oxygen content is low because it is bound to hemoglobin, whereas the carbon dioxide content is high. In cows, the total gas content in milk in the udder is at a value of 4.5-6 vol.%, with 3.5-4.9 vol.% consisting of carbon dioxide, about 1 vol.% of nitrogen and less than 0.1 vol.% of oxygen.

During or after milking, the milk comes into contact with air, whereby an equilibrium is established, and so the milk will take up oxygen. As a rule, the oxygen content will stabilize at a value of 8-15 ppm. At the same time, a large part of the carbon dioxide diffuses from the milk. All this is enhanced when milking is done utilizing vacuum techniques.

By now ensuring that the milk does not come into contact with oxygen-containing gases during and/or after milking, the content of oxygen will substantially not rise.

Thus, for instance, milking can be done utilizing vacuum techniques, after which the milk is stored in a tank, with a non-oxygen atmosphere prevailing in the headspace of the tank, at least an atmosphere with an oxygen content so low that substantially no oxygen diffuses into the milk. Such an atmosphere can for instance be created by bubbling an excess of non-oxygen gas through the milk. Especially suitable for this purpose are food-grade gases, such as those described above for displacing oxygen.

Because in low-oxygen and non-sterile pasteurized products anaerobic growth of bacteria, in particular anaerobic growth of *Clostridia,* is a risk, the presence of carbon dioxide is desirable. Carbon dioxide inhibits this microbial growth and, associated with this, also the formation of lipases and proteases by these organisms. This contributes to an increased biochemical stability of the liquid, neutral product.

In the embodiment for milk, carbon dioxide, as stated, is by nature present in that product. In a preferred embodiment, accordingly, steps are taken to keep this carbon dioxide in the milk, or else steps are taken to maintain the carbon dioxide content at a value by introducing carbon dioxide into the milk or the milk product.

Thus, for instance, in a cooling tank, the milk can be saturated with carbon dioxide. At some 4°C, the saturation concentration is about 2900 ppm for carbon dioxide; however, a content of up to about 1500 ppm carbon dioxide already provides advantages.

In managing the oxygen content according to the invention, it has furthermore been found for a number of neutral, liquid products, such as milk and milk products, that the photostability (light stability) of the milk or the milk product is improved. When a low-oxygen milk or a low-oxygen milk product according to the invention is prepared, a light-stable product is obtained.

Furthermore, the invention relates to a packaged liquid, neutral product which product is intended for consumption or for processing into food, and which product has an aqueous phase and proteins, and has a pH in the range of 5.0-8.0, which at packaging has an oxygen content lower than 500 ppb, preferably lower than 250 ppb, more preferably lower than 150 ppb, and a carbon dioxide content between 100 ppm and 1500 ppm. The sensorily perceptible amount is the amount that is determined by a trained panel member, the value depends inter *alia* on the product temperature, and for milk, for instance, is at some 300 ppm.

As indicated above, an oxygen shock already proves sufficient to obtain microbial advantages. As a consequence, also, less stringent requirements need to be, and can be, imposed on the package regarding its gas barrier properties and especially its oxygen barrier properties, since some increase of the oxygen content in the package does not lead to an immediate decrease of the microbiological quality of the packaged product.

Moreover, for those products that according to the invention possess an improved light stability, no measures, at least fewer measures, need to be taken to treat the package in connection with transparency and the like. That is, no attention or less attention needs to be paid to light barriers.

The above-mentioned advantages entail economic advantages.

In a further embodiment, the invention relates to the use of a gas mixture in milk or a milk product which product is intended for consumption or for processing into food, and which product has an aqueous phase and proteins, and has a pH in the range of 5.0-8.0, having an oxygen content lower than 500 ppb, preferably lower than 250 ppb, more preferably lower than 150 ppb, and a carbon dioxide content between 100 ppm and 1500 ppm for improving the microbiological stability.

In managing the oxygen and carbon dioxide contents in conformity with the present invention, a number of negative organoleptic, quality and nutritional value effects, such as oxidative rancidity formation, photo-catalyzed adverse flavor and/or odor formation, oxygen-induced sulfur reactions, color fading and volatile compound oxidation, do not occur or in any case do so to a reduced extent. In addition, it has been found that micronutrients such as vitamins, and in particular the B vitamins and C vitamins, remain intact to an increased extent, which also enhances the quality of the neutral, liquid product.

When the steps according to the invention are taken, especially advantages in microbiological quality are obtained. These advantages can be in the order of the advantages to be obtained with a thermization step, which conventionally comprises heating up to a temperature of 50-60°C, or even with a conventional pasteurization step.

For that matter, advantages are also obtained when lowering the oxygen content and setting a particular carbon dioxide content according to the invention take place only in a later process stage. In that case, too, advantages of extending storage life and the improved product quality are obtained. Instead of an improved shelf life, it is also possible to obtain the conventional shelf life whilst packaging in cheaper, at least qualitatively lower-grade, packaging material.

Where the steps of keeping the oxygen content low and keeping the carbon dioxide content high according to the invention are already carried out at the site where milking is done, a milk raw material is obtained which is not only of higher quality in composition and microbially, but also has a longer shelf life whilst preserving the positive properties. This means that an economic advantage can be achieved in that the milk needs to be collected or transported to the milk reception stores of milk processing plants less often.

When it has been chosen to saturate the milk upon the milking step, at least to load it with carbon dioxide to a high extent, then, at the reception, preferably, prior to the separation of the whole milk into a cream fraction and a skim milk fraction, a degassing step is used, conventionally after a heating step to above the melting temperature of milk fat. This is because carbon dioxide dissolves well in milk fat and hence may possibly entail problems, at least inconveniences, during later processing of the cream fraction. Incidentally, the cream fraction too, after being obtained, can be heated and subsequently be degassed.

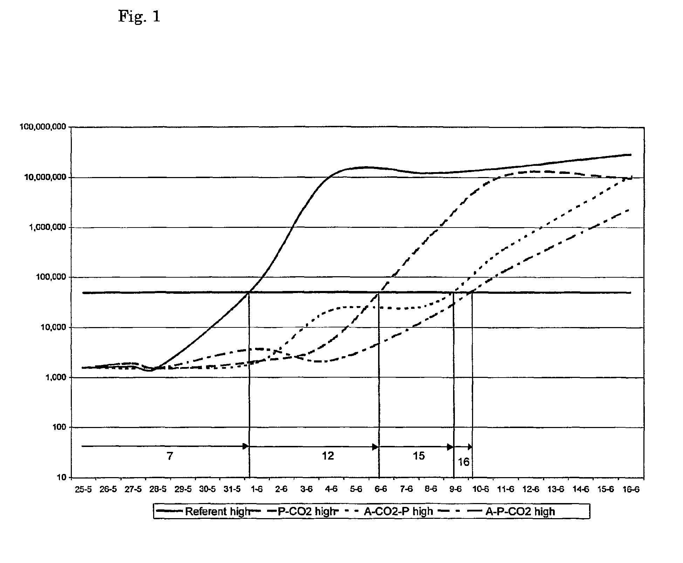

Presently, the invention will be further elucidated in and by the following non-limiting examples. In these examples, reference is made to Fig. 1, which shows the results of standard bacterial plate counts of May 25 to June 16, 2004.

### Example 1 (Reference Example)

Low-fat milk was subjected at a temperature of 7°C to bubbling with nitrogen gas to degas such that oxygen values below 500 ppb were measured with an Orbisphere gas meter. The degassed low-fat milk was filled under anoxic conditions into non-translucent bottles, as well as filled without imposing particular restrictions on oxygen contact, so that the product then came into contact with oxygen only during filling and through exchange with the gas in the headspace of the bottles.

For comparison, also low-fat milk not stripped of oxygen was filled, anoxically or not so.

In the following table, the variants are shown.

| Variant | 1 | 2 | 3 | 4 |
|---|---|---|---|---|
| Degassing | yes | yes | no | no |
| Anoxic filling | yes | no | yes | no |

### Example 2 (Reference Example)

Example 1 was repeated but the low-fat milk was now degassed under vacuum at a temperature of 55°C instead of at 7°C. In the following table the variants are described.

| Variant | 5 | 6 | 7 | 8 |
|---|---|---|---|---|
| Degassing | yes | no | no | yes |
| Anoxic filling | yes | yes | no | no |

Based on measurements of the oxygen content in the variants treated according to the invention from the Examples 1 and 2 after a few days' storage at 7°C, from which it followed that the measured oxygen value in the embodiment of Example 1 increased to above 500 ppb, it is assumed that the manner of degassing of Example 2 also removes oxygen from the fatty phase, whereas bubbling with nitrogen (Example 1) does not liberate, let alone displace, oxygen trapped in the fatty phase.

### Example 3

Low-fat milk was treated on May 25, 2004, as follows:
(1) pasteurized and, further untreated, filled;
(2) pasteurized and then injected with CO₂ to a CO₂ value of 200 ppm and filled;
(3) subjected to bubbling with nitrogen to an oxygen value below 500 ppb, injected with CO₂ to a CO₂-value of 200 ppm, pasteurized and filled; and
(4) pasteurized, subjected to bubbling with sterile nitrogen to an oxygen value below 500 ppb, injected with CO₂ to a CO₂ value of 200 ppm and filled.

From the bottles, samples were taken daily, which were subjected to a standard plate count.

The results of the plate counts are represented in Fig. 1. In this Fig. 1, the horizontal line reflects the critical value of the number of bacteria above which the product is not storable anymore.

## Claims

1. A method for conditioning a liquid, neutral product, which product is intended for consumption or for processing into food, and which product has an aqueous phase and proteins, and has a pH in the range of 5.0-8.0, comprising carrying out at least a step in which the oxygen content in this product is set at a value lower than 500 ppb, and additionally comprising the setting of the carbon dioxide content in this product at a value between 10 ppm and 1500 ppm.

2. A method according to claim 1, wherein the oxygen content is set at a value lower than 250 ppb and preferably still lower than 150 ppb.

3. A method according to claim 1 or 2, wherein the oxygen content in a neutral, liquid product having a fatty phase therein is set during a heating step to above the melting range of the fat present.

4. A method according to any one of the preceding claims, wherein the oxygen content is set by displacing oxygen using a non-oxygen gas.

5. A method according to any one of the preceding claims, wherein the oxygen content is set by displacing oxygen using a vacuum step.

6. A method according to any one of the preceding claims, wherein the neutral, liquid product is selected from liquid egg, milk, liquid neutral milk products, cream and cream products, cooking cream, pastry cream, pancake mix, soya milk and other liquids based on animal and/or vegetable proteins, as well as mixtures thereof.

7. A packaged liquid, neutral product which product is intended for consumption or for processing into food, and which product has an aqueous phase and proteins, and has a pH in the range of 5.0-8.0, which at filling has an oxygen content lower than 500 ppb, preferably lower than 250 ppb, more preferably lower than 150 ppb, and a carbon dioxide content between 100 ppm and 1500 ppm.

8. Use of a gas mixture in a liquid, neutral product, which product is intended for consumption or for processing into food, and which product has an aqueous phase and proteins, and has a pH in the range of 5.0-8.0, having an oxygen content lower than 500 ppb, preferably lower than 250 ppb, more preferably lower than 150 ppb, and a carbon dioxide content between 100 ppm and 1500 ppm, for improving the microbiological quality.

## Patentansprüche

1. Verfahren zur Konditionierung eines flüssigen neutralen Produkts, das zum Verzehr oder zur Nahrungsverarbeitung vorgesehen ist und das eine wässrige Phase und Proteine aufweist und einen pH-Wert im Bereich von 5,0 bis 8,0 hat, umfassend die Durchführung mindestens eines Schrittes, in dem der Sauerstoffgehalt des Produkts auf einen Wert von weniger als 500 ppb eingestellt wird, und zusätzlich umfassend die Einstellung des Kohlendioxidgehalts in diesem Produkt auf einen Wert zwischen 100 und 1.500 ppm.

2. Verfahren gemäss Anspruch 1, worin der Sauerstoffgehalt auf einen Wert von weniger als 250 ppb und bevorzugt noch weniger als 150 ppb eingestellt wird.

3. Verfahren gemäss Anspruch 1 oder 2, worin der Sauerstoffgehalt in einem neutralen flüssigen Produkt, das eine fettige Phase beinhaltet, während eines Erwärmungsschrittes auf oberhalb des Schmelzbereichs des vorhandenen Fettes eingestellt wird.

4. Verfahren gemäss irgendeinem der vorstehenden Ansprüche, worin der Sauerstoffgehalt durch Verdrängung von Sauerstoff unter Verwendung eines Nicht-Sauerstoffgases eingestellt wird.

5. Verfahren gemäss irgendeinem der vorstehenden Ansprüche, worin der Sauerstoffgehalt durch Verdrängung von Sauerstoff unter Verwendung eines Evakuierungsschrittes eingestellt wird.

6. Verfahren gemäss irgendeinem der vorstehenden Ansprüche, worin das neutrale flüssige Produkt aus Flüssigei, Milch, flüssigen neutralen Milchprodukten, Sahne und Sahneprodukten, Kochsahne, Konditorcreme, Pfannkuchenmischung, Sojamilch und anderen auf tierischen und/oder pflanzlichen Proteinen basierenden Flüssigkeiten sowie Mischungen davon ausgewählt ist.

7. Verpacktes, flüssiges, neutrales Produkt, das zum Verzehr oder zur Nahrungsverarbeitung vorgesehen ist und das eine wässrige Phase und Proteine aufweist und einen pH-Wert im Bereich von 5,0 bis 8,0 hat, das beim Abfüllen einen Sauerstoffgehalt von weniger als 500 ppb, vorzugsweise weniger als 250 ppb, noch bevorzugter weniger als 150 ppb, und einen Kohlendioxidgehalt zwischen 100 und 1.500 ppm hat.

8. Verwendung einer Gasmischung in einem flüssigen neutralen Produkt, das zum Verzehr oder zur Nahrungsverarbeitung vorgesehen ist und das eine wässrige Phase und Proteine und einen pH-Wert im Bereich von 5,0 bis 8,0, einen Sauerstoffgehalt von weniger als 500 ppb, bevorzugt weniger als 250 ppb, noch bevorzugter weniger als 150 ppb, und einen Kohlendioxidgehalt zwischen 100 und 1.500 ppm hat, um die mikrobiologische Qualität zu verbessern.

## Revendications

1. Procédé de conditionnement d'un produit liquide neutre, lequel produit est destiné à la consommation ou à la transformation en produits alimentaires, et lequel produit possède une phase aqueuse et des protéines, et présente un pH dans le domaine de 5,0 à 8,0, comprenant la réalisation d'au moins une étape dans laquelle la teneur en oxygène dans ce produit est fixée à une valeur inférieure à 500 ppb, et comprenant en outre la fixation de la teneur en dioxyde de carbone dans ce produit à une valeur comprise entre 10 ppm et 1500 ppm.

2. Procédé selon la revendication 1, où la teneur en oxygène est fixée à une valeur inférieure à 250 ppb et de préférence toujours inférieure à 150 ppb.

3. Procédé selon la revendication 1 ou 2, où la teneur en oxygène dans un produit liquide neutre ayant une phase grasse dans celui-ci est déterminée durant une étape de chauffage au-dessus du domaine de fusion de la présente graisse.

4. Procédé selon l'une quelconque des revendications précédentes, où la teneur en oxygène est déterminée en déplaçant l'oxygène en utilisant un gaz différent de l'oxygène.

5. Procédé selon l'une quelconque des revendications précédentes, où la teneur en oxygène est déterminée en déplaçant l'oxygène en utilisant une étape sous vide.

6. Procédé selon l'une quelconque des revendications précédentes, où le produit liquide neutre est choisi parmi de l'oeuf liquide, du lait, des produits lactés neutres liquides, de la crème et des produits à base de crème, de la crème de cuisine, de la crème à pâtisserie, les préparations pour pancake, du lait de soja et d'autres liquides à base de protéines animales et/ou végétales, ainsi que leurs mélanges.

7. Produit liquide neutre conditionné lequel produit est destiné à la consommation ou à la transformation en produits alimentaires, et lequel produit possède une phase aqueuse et des protéines, et présente un pH dans le domaine de 5,0 à 8,0, qui lors du remplissage présente une teneur en oxygène inférieure à 500 ppb, de préférence inférieure à 250 ppb, de manière davantage préférée inférieure à 150 ppb, et une teneur en dioxyde de carbone comprise entre 100 ppm et 1500 ppm.

8. Utilisation d'un mélange gazeux dans un produit liquide neutre, lequel produit est destiné à la consommation ou à la transformation en produits alimentaires, et lequel produit possède une phase aqueuse et des protéines, et présente un pH dans le domaine de 5,0 à 8,0, ayant une teneur en oxygène inférieure à 500 ppb, de préférence inférieure à 250 ppb, de manière davantage préférée inférieure à 150 ppb, et une teneur en dioxyde de carbone comprise entre 100 ppm et 1500 ppm, pour améliorer la qualité microbiologique.
